(19) Europäisches Patentamt
European Patent Office
Office européen des brevets

(11) Veröffentlichungsnummer: **0 060 506**
**B1**

(12) # EUROPÄISCHE PATENTSCHRIFT

(45) Veröffentlichungstag der Patentschrift: **04.02.87**

(51) Int. Cl.⁴: **C 08 G 59/16**, C 08 G 59/42, C 08 G 59/34, C 09 D 3/58

(21) Anmeldenummer: **82101906.6**

(22) Anmeldetag: **10.03.82**

(54) **Mit Wasser verdünnbares Epoxyd, Verfahren zu seiner Herstellung und dessen Verwendung.**

(30) Priorität: **14.03.81 DE 3109900**

(43) Veröffentlichungstag der Anmeldung: **22.09.82 Patentblatt 82/38**

(45) Bekanntmachung des Hinweises auf die Patenterteilung: **04.02.87 Patentblatt 87/6**

(84) Benannte Vertragsstaaten: **AT BE CH DE FR GB IT LI NL SE**

(56) Entgegenhaltungen:
**DE-A-1 595 227**
**DE-A-1 933 126**
**FR-A-1 596 707**
**GB-A-874 968**
**GB-A-1 108 281**
**GB-A-1 159 585**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Walz, Gerd, Dr., Pfingstbornstrasse 99, D-6200 Wiesbaden (DE)**
Erfinder: **Wirth, Thaddäus, Dr., Kemeler Weg 6, D-6209 Heidenrod- Wisper (DE)**
Erfinder: **Sprenger, Walter, Ringstrasse 8, D-6110 Dieburg (DE)**

**EP 0 060 506 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Als Bindemittel in der Beschichtungsindustrie haben sich Polyepoxyde mit Glycidyläther- oder -estergruppen aufgrund ihrer hervorragenden und außerordentlich variablen Eigenschaften einen breiten Anwendungsbereich erobert.

Die Anwendung der Polyepoxyde erfolgt mit geeigneten Härtungsmitteln und Zusatzstoffen wie Pigmenten, Füllstoffen und Katalysatoren meist in flüssiger Form, wobei die flüssige Form von vornherein gegeben ist oder auch durch Zusatz von organischen Lösungsmitteln erreicht werden kann. Je nach Härtungsmittel härten die daraus hergestellten Überzüge bei Raumtemperatur oder auch unter Einbrennbedingungen aus.

Die Polyepoxyde können mit geeigneten Härtungsmitteln auch in fester, feingemahlener Form, z. B. als Pulverlacke aufgebracht werden.

Es ist allgemein bekannt, Polyepoxyde in weitgehend wasserfreier, flüssiger oder fester Form in der Beschichtungsindustrie zu verwenden, jedoch ist die Anwendung von Polyepoxyden mit intakt gebliebenen Epoxydgruppen mit Wasser als vorwiegendem Lösungsmittel in der flüssigen Phase nur aus wenigen Veröffentlichungen bekannt.

Bei einem bekannten Verfahren wird ein Epoxydgruppen tragendes Bindemittel in Form eines feingemahlenen, wasserlöslichen Pulvers in einem wasserlöslichen, epoxydgruppenfreien Bindemittel dispergiert und mit diesem gemeinsam elektrophoretisch abgeschieden und gehärtet.(DE-A-22 48 836)

Nach einem weiteren bekannten Verfahren wird ein fertig konfektionierter, meist epoxydgruppenhaltiger, feinstgemahlener, wasserünlöslicher Pulverlack in Wasser dispergiert und durch übliche Auftragstechniken, wie Spritzen, auf Untergründe aufgebracht und gehärtet.(Farbe u. Lack 86(1980)1056

Eine andere Veröffentlichung sieht vor, daß ein fein gemahlenes, festes, wasserinlösliches Epoxydgruppen tragendes Harz in einem maleinisierten Öl dispergiert und durch übliche Auftragstechniken auf Unterlagen ausgebracht und gehärtet, wird. (EP 15035)

Es wurde auch schon vorgeschlagen, ein fein gemahlenes, festes, wasserunlösliches Epoxydgruppen tragendes Harz mit speziellen wasserlöslichen Bindemitteln zu und durch übliche Auftragstechniken auf Unterlagen aufzubringen und zu härten. (DE-A-30 24 158)

Bekannt sind auch Handelsprodukte von flüssigen Epoxyden, die zusammen mit geeigneten Aminen in Wasser emulgiert werden können. Sie werden anschließend durch übliche Auftragstechniken auf Unterlagen aufgetragen und nach üblichen Methoden gehärtet. (z.B. Beckopox VEP 22 der Fa. Hoechst AG)

Charakteristisch für diese bekannten Epoxyde bzw. Handelsprodukte ist, daß die Epoxydgruppen tragende Komponente in einer hydrophoben, dispersen Form in Wasser vorliegt und daß die Epoxydgruppen daher nicht an eine wasserlösliche Substanz gebunden sind.

Solche dispersen Systeme haben auf dem Beschichtungssektor die bekannten Nachteile wie eingeschränkte Verarbeitbarkeit, schlechtes Verlaufen, schlechten Glanz, schlechtes Füllvermögen und gegenüber gelösten Systemen schlechtere Pigmentierbarkeit.

Aus der DE-A-19 33 126 sind wäßrige Dispersionen für das Elektrotauchlackieren bekannt, die ein Carboxylpolymeres aus epoxidierten, trocknendem Öl, aliphatischen Monocarbonsäuren und einer Dicarbonsäure oder deren Anhydrid enthalten, dessen ursprüngliche Epoxidgruppen zu 51 bis 100 % verestert sein können. Derartige Verbindungen besitzen aber aufgrund ihrer verbliebenen Epoxidgruppen nur eine beschränkte Reaktivität.

In Wasser gelöste, stabile Polyepoxyde sind auch in der DE-A-28 11 913 beschrieben. Die dort angeführten wasserlöslichen Polyepoxyde haben sich zwar gut bewährt, es war jedoch erwünscht, Produkte mit überschüssigen, freien Epoxydgruppen herzustellen.

Gegenstand der Erfindung ist ein mit Wasser verdünnbares Epoxyd, das frei von Glycidylester- und -äthergruppen und dadurch gekennzeichnet ist, daß es außer mindestens einer Epoxydgruppe mindestens eine Estergruppe einer Monocarbonsäure und eine dieser benachbarte weitere Estergruppe enthält, die durch Umsetzung einer OH-Gruppe mit einem Polycarbonsäuremonoanhydrid entstanden ist, wobei die aus dem Anhydrid bei der Veresterung gebildete zweite COOH-Gruppe ganz oder teilweise in Form eines Salzes einer Base, die in Mengen von mindestens 1 Gew.-% eingesetzt ist und sich auf das unversalzte Reaktionsprodukt bezieht, vorliegt und worin die Anzahl der Esterbindungen der Monocarbonsäure höchstens so groß ist wie die Zahl der nach intakten Epoxydgruppen.

Die erfindungsgemäßen Epoxyde, die vorzugsweise Polyepoxyde sind, aber auch Monoepoxyde umfassen, sind nicht nur wasserlöslich, sondern sie besitzen darüber hinaus noch die erwünschten freien Epoxydgruppen, die als funktionelle Gruppen zur Härtung von anderen Polymeren mit entsprechenden anderen funktionellen Gruppen dienen können.

Als Ausgangspolyepoxyde eignen sich glycidylester- und glycidylätherfreie Polyepoxyde mit mindestens zwei Epoxydgruppen im Molekül, z.B. epoxydierte Fettsäuren oder deren Derivate gemäß Formel I (siehe Formelblatt), wobei die Formel nur linear dargestellt ist, jedoch auch verzweigt sein kann und

worin

$R^1$ gleiche oder verschiedene Reste, und zwar Wasserstoff oder einen Alkylrest mit 1 bis 22, vorzugsweise 1 bis 5 C-Atomen, dessen Kohlenstoffkette gegebenenfalls durch mindestens eine Ester- und/oder Äthergruppe unterbrochen ist, wobei die Estergruppe auch einer Epoxydgruppe benachbart sein kann- und diese Gruppierung auch im erfindungsgemäßen modifizierten Epoxyd möglich ist - und

$R^2$ gleiche oder verschiedene Alkylenreste mit 1 bis 22, vorzugsweise 2 bis 18 C-Atomen, dessen

Kohlenstoffkette gegebenenfalls durch mindestens eine Ester- und/oder Äthergruppe unterbrochen ist, wobei die Estergruppe auch einer Epoxydgruppe benachbart sein kann - und - diese Gruppierung auch im erfindungsgemäßen modifizierten Epoxyd möglich ist - und

n eine ganze Zahl von 1 bis 20

bedeuten, beispielsweise epoxydiertes Lein- oder Sojaöl, epoxydierte Ester, z. B. Alkylester der Ricinen-, Linolen- oder Arachidonfettsäure, die epoxydierten Fettsäuren der genannten Öle und Ester, ferner epoxydierte Polyolefine, wie epoxydiertes Polybutadienöl, epoxydiertes Polyisoprenöl. Ein epoxydierter Ester einer ungesättigten Fettsäure ist z. B. aus Formel Ia (siehe Formelblatt) ersichtlich.

Weitere Beispiele für Ausgangspolyepoxyde sind Verbindungen der Formel II (siehe Formelblatt), worin

R einen Alkylenrest mit 2 bis 22, vorzugsweise 2 bis 18 C-Atomen, der gegebenenfalls mindestens eine zwischengeschaltete Ester- und/oder Äthergruppe enthält, einen Rest $-COO-CH_2-$ oder $-CH_2-OOC-(CH_2)_m-COO-CH_2-$, worin

m eine ganze Zahl von 2 bis 8, vorzugsweise 2 bis 4 ist,

beduten, z. B. 3,4-Epoxycyclohexylmethyl-3',4'-epoxy-cyclohexancarboxylat oder Bis-(3,4-epoxycyclohexylmethyl)-adipat.

Der Monocarbonsäurerest in den erfindungsgemäßen modifizierten Epoxyden leitet sich vorteilhaft von einer Monocarbonsäure mit 2 bis 22 C-Atomen ab, vorzugsweise einer Monocarbonsäure mit 2 bis 18 C-Atomen, die frei von aliphatischen Mehrfachbindungen ist, z. B. Palmitinsäure, Kokosölfettsäure, insbesondere einer solchen mit 2 bis 10 C-Atomen wie Essigsäure, Propionsäure, Hexansäure, Isononansäure, einer aromatischen, wie Benzoesäure, Butylbenzoesäure oder einer olefinisch ungesättigten mit 3 bis 20, vorzugsweise 8 bis 18 C-Atomen, wie Acrylsäure, Zimtsäure, Leinölfettsäure, Rizinenfettsäure, Ölsäure, Linolsäure, Linolensäure oder Sojaölfettsäure.

Es ist ebenfalls möglich, um besondere anwendungstechnische Effekte zu erzielen, einen Teil der Monocarbonsäure durch Carbonsäuren mit mindestens 2 COOH-Gruppen oder deren Anhydride zu ersetzen. Der Anteil an Monocarbonsäuren sollte jedoch 50 Mol-% nicht unterschreiten und der Anteil der COOH-Gruppen aus diesen Polycarbonsäuren sollte vorzugsweise 50 % der gesamten COOH-Gruppen nicht überschreiten.

Geeignete zusätzliche Polycarbonsäuren, vorzugsweise Di- und/oder Tricarbonsäuren, sind beispielsweise solche mit 2 bis 16 C-Atomen, wie Malonsäure, Bernsteinsäure, Glutarsäure, Adipinsäure, Korksäure, Sebacinsäure, Citronensäure, Propantricarbonsäure, Maleinsäure, Fumarsäure, Itaconsäure, Citraconsäure, Phthalsäure, deren Tetra- und/oder Hexahydroderivate, die entsprechenden Endomethylenverbindungen, Isophthalsäure, Terephthalsäure, Naphthalindicarbonsäuren, Trimellithsäure, Trimesinsäure, ferner die weiter unten genannten Polycarbonsäureanhydride bzw. die entsprechenden Carbonsäuren.

Geeignete Polycarbonsäuremonoanhydride, die den erfindungsgemäßen modifizierten Epoxyden zugrundeliegen, sind z. B. Anhydride zwei oder dreiwertiger, vorzugsweise carbocyclischer oder aliphatischer Carbonsäuren, wie Phthalsäureanhydrid, Tetra- und Hexahydrophthalsäureanhydrid, die entsprechenden Endomethylenverbindungen, Trimellithsäureanhydrid, Bernsteinsäureanhydrid sowie die Halogenierungsprodukte dieser Anhydride, sofern diese existieren, wobei Hexahydrophthalsäureanhydrid bevorzugt ist.

Die zur Salzbildung dienenden Basen sind vor allem tertiäre Amine, z. B. Aryl-, Aralkyl- und/oder Alkylamine oder gemischt aliphatisch-aromatische Amine wie Trimethyl-, Triäthyl- oder Tripropylamin, Dimethylisopropylamin, Diäthylisopropylamin, Dimethylisobutylamin, Phenyldialkylamin, z. B. Phenyldimethylamin, Diphenylalkylamin, wie Diphenylmethylamin und die entsprechenden Homologen sowie Pyridin. Der Anteil dieser Basen im modifizierten Epoxyd beträgt im allgemeinen 1 bis 15, vorzugsweise 1 bis 10 Gew.-%, bezogen auf das unversalzte Reaktionsprodukt.

In manchen Fällen können auch anorganische Basen, z. B. Alkali- und/oder Erdalkaliverbindungen, eingesetzt werden. Jedoch ist dies nicht die bevorzugte Ausführungsform der Erfindung.

Die mit Wasser verdünnbaren modifizierten Epoxyde lassen sich so herstellen, daß

a) in erster Stufe ein Teil der Epoxydgruppen eines Ausgangspolyepoxyds, das frei von Glycidylester- und -äthergruppen ist, mit einer Monocarbonsäure unter Bildung einer, der gebildeten Estergruppe benachbarten, OH-Gruppe verestert wird,

b) daß gleichzeitig oder vorzugsweise in zweiter Stufe die freien OH-Gruppen mit einem Polycarbonsäuremonoanhydrid in Gegenwart einer Base, vorzugsweise eines tertiären Amins, umgesetzt werden, wobei die Anhydridgruppe geöffnet und eine COOH-Gruppe davon verestert und die zweite COOH-Gruppe wenigstens teilweise in das Salz der entsprechenden Base übergeführt wird, worauf

c) das Produkt als solches gewonnen oder in einer weiteren Stufe mit einem Lösungsmittel, vorzugsweise Wasser, verdünnt wird und eventuell weitere Mengen von Basen, vorzugsweise tertiäre Amine einschließlich tertiärer Alkanolamine, zugesetzt werden.

Pro Molekül Epoxydverbindung wird bei der Umsetzung mit der Monocarbonsäure in der Regel eine Hydroxylgruppe erzeugt. Es ist möglich, sowohl weniger als auch mehr als eine Epoxydgruppe pro Molekül Epoxydverbindung auf diese Weise in Hydroxylgruppen umzuwandeln. Die Hydroxyl-Zahlen der so erzeugten Verbindung sollten zwischen 20 und 200, vorzugsweise zwischen 40 und 100, liegen.

Die Umsetzung in erster Stufe erfolgt gewöhnlich bei einer Temperatur von mindestens 30°C und höchstens etwa 200°C, vorzugsweise bei 30 bis 140°C. In zweiter Stufe erfolgt die Anlagerung der Monoanhydride im allgemeinen zwischen Raumtemperatur und 120°C, vorzugsweise bei 30 bis 100°C. In manchen Fällen kann der

Temperaturbereich auch nach oben überschritten werden, z. B. wenn man unter erhöhtem Druck arbeitet.

Diese Anlagerung der Monoanhydride kann ebenso wie die Reaktion in erster Stufe auch in Gegenwart von hydroxylgruppenfreien organischen Lösungsmitteln durchgeführt werden. In der Regel ist jedoch die Verwendung solcher Lösungsmittel nicht notwendig.

Hierfür eignen sich als Lösungsmittel beispielsweise aliphatische Kohlenwasserstoffe, wie Benzine, Ligroin, Aromaten wie Benzol, Toluol, Xylol, Chlorbenzol, Nitrobenzol, Cyclohexan, Äthylacetat, Butylacetat, Äthylenglykol-bis-acetat, N,N-Dimethylformamid, N,N-Dimethylacetamid, Dimethylsulfoxyd, N-Methylpyrrolidon, N,N',N''-Hexamethylphosphorsäuretriamid, Phosphorsäure-tris-(dimethylamid), Ketone, wie Aceton, Methyläthylketon und Dibutylketon, Cyclohexanon, Isophoron, Acetophenon, Äther, wie Diäthyl-, Dipropyläther, Äthylenglykol-bis-äthyläther.

Bei gleichzeitiger Durchführung der Umsetzung mit der Monocarbonsäure und dem Monoanhydrid wird gewöhnlich im Bereich zwischen Raumtemperatur und 120°C gearbeitet.

Bei der Veresterung mit der Monocarbonsäure werden bis zu 50, vorzugsweise 10 bis 50 % der Epoxydgruppen des Ausgangsepoxyds verestert. Hierbei kann auch ein Katalysator anwesend sein, z. B. Alkalisalze und/oder Alkalihydroxyde, tertiäre Amine, z. B. die oben genannten, quartäre Ammoniumsalze, z. B. Cholin, Tetraalkylammoniumhydroxyd oder -halogenide, z. B. Tetrabutylammoniumjodid, -chlorid oder die Alkylsubstitutionsprodukte, dieser Ammoniumverbindungen, ferner Chrom- III-Verbindungen. In Gegenwart der Katalysatoren kann die Umsetzung schon bei Raumtemperatur erfolgen.

Es ist auch möglich, das Polycarbonsäuremonoanhydrid im Gemisch mit Bisanhydriden umzusetzen. Jedoch sollte der Anteil der Bisanhydride 20 Mol-% der gesamten Anhydridkomponenten nicht übersteigen. Geeignete Bisanhydride sind beispielsweise Pyromellithsäureanhydrid, Umsetzungsprodukte von Trimellithsäureanhydrid mit mehrwertigen Alkoholen wie Äthandiol, den Propandiolen, Glycerin, Pentaerythrit oder dergleichen, wie sie beispielsweise in der DOS 27 54 399 beschrieben sind, ferner Bisanhydride mit der Gruppierung gemäß einer der Formeln (III) bis (XII) (siehe Formelblatt).

Wenn die erfindungsgemäß erhaltenen Produkte als solche gewonnen werden, können sie ohne Schwierigkeiten gelagert werden. Wenn sie mit einem Lösungsmittel verdünnt werden, so wird hierfür in der Regel Wasser, gegebenenfalls unter Zusatz von organischen Lösungsmitteln, vorzugsweise solchen die mit Wasser verdünnbar sind, z. B. Alkanolen mit bis zu 6 C-Atomen, wie Methanol, Äthanol, den Propanolen, Butanolen, Pentanolen und Hexanolen, oder Alkandiolen mit bis zu 5 C-Atomen wie Äthandiol, Propandiol oder deren Oligomeren, deren Ester und/oder Äther, ferner Butandiol oder Pentandiol eingesetzt. Andererseits ist es auch möglich, nicht mit Wasser verdünnbare Lösungsmittel wie Aromaten, z. B. Benzol, Toluol, Xylol, ferner Benzine oder Ketone, z. B. Aceton oder Methyläthylketon zu verwenden.

Gegebenenfalls können dem Lösungsmittel auch Basen zugesetzt werden, wobei zweckmäßig der pH-Wert der wäßrigen Lösung auf Bereiche von 5 bis 11, vorzugsweise 6 bis 9 eingestellt wird, um eine unerwünschte Eigenkondensation des Produktes zu vermeiden. Geeignete Basen sind beispielsweise dieselben, die - wie oben genannt - auch zur Salzbildung herangezogen werden können.

Die mit Wasser verdünnten erfindungsgemäßen Epoxyde zeigen überraschenderweise eine sehr gute Lagerbeständigkeit, z.B. von 4 Wochen bei 50°C. Neben ihrer Wasserlöslichkeit haben die erfindungsgemäßen modifizierten Epoxyde aufgrund ihrer noch vorhandenen freien Epoxydgruppen die Eigenschaft, daß sie sich sowohl allein als auch in Kombination mit Aminharzen in Gegenwart von Verbindungen, die Amin- und/oder Ammoniumsalze von COOH-Gruppen tragen und die als Härter wirken, ohne Schwierigkeiten härten lassen. Besonders geeignete Härter sind solche Salze von Polycarbonsäuren, z.B. der oben genannten Polycarbonsäuren. Besonders bevorzugt ist die Verwendung von wasserlöslichen oder in Wasser dispergierbaren Harzen, deren freie COOH-Gruppen mit Aminen neutralisiert sind, als Härter allein oder zusammen mit den vorstehend genannten Aminhärtern.

Geeignete Harze mit ganz oder teilweise versalzten COOH-Gruppen sind beispielsweise die bekannten gesättigten oder ungesättigten Polyester oder Polymere, z. B. Acrylpolymere wie Copolymere von Acryl- und/oder Methacrylsäure mit anderen copolymerisierbaren Monomeren oder Maleinsäure-Styrol-Copolymere. Von ganz besonderem Interesse sind mit Wasser verdünnbare Polyester nach DE-A1-31 33 319 (Priorität 31 09 968.8) vom gleichen Tage. Diese Polyester auf der Basis von A) Dicarbonsäureeinheiten, B) mindestens einem als Halbester eingebauten Polycarbonsäuremonoanhydrid, das von Phthalsäureanhydrid und Maleinsäureanhydrid verschieden ist, und C) einer mindestens zweiwertige Alkohole aufweisenden Alkoholkomponente sind auf der Basis von D) mindestens einer chemisch eingebauten Epoxydverbindung, die mindestens zwei Oxiranringe enthält, der Gruppe epoxydierte Fettsäuren, deren Derivate und epoxydierte aliphatische Kohlenwasserstoff oder deren Gemischen mit bis zu 30 % Monoepoxyden hergestellt, wobei die Prozentangabe auf Epoxydgruppen bezogen ist und wobei die COOH-Gruppen des Polyesters zumindest teilweise als Ammoniumsalze vorliegen. Das Gewichtsverhältnis der modifizierten Epoxyde zu den Harzen mit teilweise oder vollständig versalzten COOH-Gruppen beträgt zweckmäßig (10 bis 90) : (90 bis 10), vorzugsweise (10 bis 50) : (90 bis 50). Bei der Kombination dieser Komponenten werden durch die Vernetzung der Carboxylgruppen elastische, biegsame, sehr wasserfeste und überraschenderweise auch sehr alkalifeste Beschichtungen erhalten. Ferner hat es sich gezeigt, daß die Verarbeitbarkeit solcher Mischungen durch die Anwesenheit der erfindungsgemäßen Polyepoxyde bedeutend verbessert wird. So erfolgt z. B. kein unerwünschtes Absetzen der Pigmente und bei Verwendung organischer Pigmente erhält man mit diesen wäßrigen Systemen einen besseren Glanz als bisher. Außerdem wird beim Aufbringen der Beschichtung durch Spritzen eine glatte Oberfläche erzielt. Darüberhinaus lassen sich auf diese Weise höhere Schichtdicken

herstellen, ohne daß bei der Warmhärtung Blasenbildung auftritt.

Da aus Umweltschutzgründen die Säurezahlen von Dispersionen oder von mit Aminen neutralisierten Polyestern und/oder Polymerisaten möglichst niedrig gehalten werden, damit eben der Amin-Gehalt niedrig ist, ist die Vernetzungsdichte, die durch Kombination mit wasserlöslichen Epoxyden alleine erhalten werden kann, nicht sehr groß, so daß die Mitverwendung von Aminharzen als zusätzlichen Härtungsmitteln besonders vorteilhaft ist.

Als Aminharze eignen sich z. B. Melamin- und/oder Harnstoffharze, insbesondere Hexamethoxymethylmelamin oder Teilverätherungsprodukte von Hydroxymethylmelaminen.

Diese Aminharze können z. B. in einem Anteil von 0 bis 50, vorzugsweise 5 bis 40 Gew.-%, bezogen auf das Gesamtgewicht der modifizierten Epoxyde und der COOH-Gruppen enthaltenden Härter, eingesetzt werden.

Die Härtung kann, vor allem wenn sie bei niedrigen Temperaturen erfolgen soll, auch in Gegenwart von Katalysatoren vorgenommen werden. Hierfür kommen dieselben Katalysatoren in Frage, die auch zur Veresterung mit der Monocarbonsäure geeignet sind. Die Härtung kann bei Raumtemperatur bis 300, vorzugsweise zwischen 50°C und 180°C vorgenommen werden. Bei zusätzlicher Verwendung von Aminharzen genügen - auch ohne zusätzliche Katalysatoren - schon Temperaturen von 60 bis 80°C für eine vollständige Aushärtung.

Die erfindungsgemäßen Epoxyde finden vor allem Verwendung als Bindemittel in wäßrigen oder mit Wasser verträglichen Medien, insbesondere zur Herstellung von Anstrichmitteln und gehärteten Überzügen. Sie können auch mit COOH-Gruppen enthaltenden Substanzen und/oder Aminharzen kombiniert werden. Diese Kombinationen können elektrophoretisch abgeschieden werden. Im Rahmen der Erfindung liegt auch die Verwendung der erfindungsgemäßen Epoxyde als Zusatz zu Dispersionen von Monomeren und/oder Polymeren. Dabei können die Epoxyde wegen ihrer Wasserlöslichkeit als Emulgatoren dienen. Dies ist z. B. dann der Fall, wenn die Monomeren einer Emulsionspolymerisation unterzogen werden. Man erhält hierbei stabile Polymerisat-Dispersionen.

Andererseits besteht die Möglichkeit, daß die erfindungsgemäßen modifizierten Epoxyde auch als Stabilisator eingesetzt werden, z. B. für Polymerisatdispersionen, die vorzugsweise ganz oder zum Teil aus chlorhaltigen Monomeren wie Vinylchlorid aufgebaut sind oder für die Stabilisierung des pH-Werts in wäßrigen Lösungenoder Dispersionen von Bindemitteln mit verseifbaren Gruppen, z. B. COOH- und/oder Estergruppen.

In nachstehenden Beispielen bedeuten % Gewichtsprozent, T Gewichtsteile. EÄG bedeutet Epoxydäquivalentgewicht (bezogen auf Festharz).

**Beispiele**

**I) Herstellung der modifizierten Epoxyde**

1) In einem Kolben, ausgestattet mit Rückflußkühler, Rührer, Thermometer und Heizvorrichtung, werden 245 T epoxydiertes Sojaöl mit einem Epoxydäquivalentgewicht von 260 sowie eine Lösung von 0,26 T Lithiumhydroxyd und 16,5 T Essigsäure 15 Stunden auf 100°C unter leichtem Rückfluß erhitzt. Die Säurezahl beträgt danach 4. Die Mischung wird auf 50°C abgekühlt. Dann werden 30,8 T Phthalsäureanhydrid und 21 T wasserfreies Triäthylamin zugefügt. Nach 4 Stunden bei 50°C beträgt die Säurezahl 52. Anschließend wird mit 470 T entionisiertem Wasser verdünnt. Man erhält eine opake Lösung mit pH = 7,8 und einem Festkörper von 40 %, EÄG 492.

2) Im Reaktionsgefäß von Beispiel 1 werden 245 T epoxydiertes Sojaöl des Beispiels 1, 16 T Essigsäure und 0,5 T entwässertes Chrom-(III)-octoat 3 1/2 Stunden bei 110°C unter leichtem Rückfluß erhitzt. Die Säurezahl beträgt danach 0,9. Die Mischung wird auf 50°C gekühlt und 36,6 T Phthalsäureanhydrid sowie 25 T wasserfreies Dimethylisobutylamin zugefügt und 4 Stunden bei 50°C gehalten. Die wäßrige Säurezahl beträgt danach 48,7. Das Gemisch wird mit 485 T entionisiertem Wasser auf eine klare 40%ige Lösung mit pH = 7,5 verdünnt; EÄG 520.

3) 612,5 T epoxydiertes Sojaöl des Beispiels 1 und 50,9 T Propionsäure sowie 0,5 T Cholin werden wie nach Beispiel 1 4 Stunden lang auf 110°C erhitzt. Die Säurezahl beträgt danach 0,6. Die Mischung wird auf 50°C gekühlt und 83,9 T Phthalsäureanhydrid sowie 57,2 T Triäthylamin zugesetzt. Nach 4-stündiger Umsetzung bei 50°C ist die Säurezahl 45. Nach Zufügen von 1216 T entionisiertem Wasser erhält man eine leicht opake 40%ige Lösung mit pH = 8,5; EÄG 460.

4) Beispiel 2 wird wiederholt, jedoch wird 4 Stunden auf 110°C erhitzt. Die Säurezahl beträgt danach 0,7. Die Mischung wird auf 50°C gekühlt und 24,5 T Maleinsäureanhydrid und 25,3 T Triäthylamin zugefügt. Nach 3 Stunden Umsetzung bei 50°C wird eine Säurezahl von 50 erreicht und anschließend mit 467 T entionisiertem Wasser auf eine dunkle opake Lösung von pH = 7,2 verdünnt; EÄG 505.

5) Im Reaktionsgefäß von Beispiel 1 werden 234 T des epoxydierten Sojaöls des Beispiels 1 mit 16 T Essigsäure und 0,2 T entwässertem Chrom(III)octoat 4 Stunden bei 110°C erhitzt, anschließend auf 50°C abgekühlt. Die Säurezahl beträgt 1,6. Anschließend werden 48 T Endomethylenhexahydrophthalsäureanhydrid und 26,6 T Triäthylamin zugefügt und die Mischung 7 Stunden auf 50°C erhitzt. Die Säurezahl beträgt 67. Das Gemisch wird mit 487 T entionisiertem Wasser auf 40 % verdünnt. Die Lösung vom pH = 8,1 wird mit

Dimethylaminoäthanol auf pH = 9,0 eingestellt. Die Lösung ist klar; EÄG 546.

6) Vorprodukt A: 1470 T des epoxydierten Sojaöls wie nach Beispiel 1 werden mit 99 T Essigsäure und 3 T Tetrabutylammoniumhydroxyd 6 Stunden bei 110°C am Rückfluß erhitzt. Die Säurezahl beträgt 1,6.

Vorprodukt B: 308 T Hexyhydrophthalsäureanhydrid und 192 T Trimellithsäureanhydrid werden bei 160°C geschmolzen und auf 100°C abgekühlt. Aus einem Tropftrichter werden vorsichtig 101 T Triäthylamin zugefügt.

500 T Vorprodukt A, 68,7 T Vorprodukt B, 35,1 T Phthalsäureanhydrid sowie 43,2 T Triäthylamin werden unter Rühren in einem mit Rückflußkühler ausgestatteten Kolben zunächst 45 Minuten bei 70°C umgesetzt. Anschließend wird das Gemisch noch 3 Stunden bei 50°C bis zur Säurezahl 60 umgesetzt. Dann wird mit 970 T entionisiertem Wasser auf 40 % verdünnt und der pH mit Dimethylaminoäthanol auf 8,5 eingestellt. Man erhält eine klare Lösung; EÄG 640.

7) Vorprodukt: 1613 T epoxydiertes Leinöl (EÄG 180), 45 T Trimellithsäureanhydrid, 127,1 T Essigsäure und 0,9 T Chrom(III)octoat werden unter Rühren 3 Stunden am Rückfluß bis zur Säurezahl 0,8 erhitzt.

500 T dieses Vorproduktes, 101,5 T Hexahydrophthalsäureanhydrid und 59,5 T Triäthylamin werden 4 Stunden lang im Reaktionsgefäß von Beispiel 1 bei 60°C erhitzt. Die Säurezahi ist danach 53,6. Mit 991 T entionisiertem Wasser wird auf eine 40%ige Lösung eingestellt. Mit Dimethylaminoäthanol wird ein pH von 9,2 eingestellt. Die Lösung ist klar bis leicht opak; EÄG 380.

8) Im Reaktionsgefäß des Beispiels 1 werden 440 T des epoxydierten Leinöls nach Beispiel 7, 33 T Essigsäure und 0,5 T Chrom(III)octoat 4 Stunden auf 110°C bis zum Erreichen einer Säurezahl von 0,25 erhitzt. Nach Abkühlen auf 80°C werden 97,5 T Hexahydrophthalsäureanhydrid und 5,8 T Tripropylamin zugefügt und 10 Stunden bei 80°C erhitzt, bis die Säurezahl 50,6 beträgt. Anschließend wird mit 917 T Wasser und 34,8 T Dimethylaminoäthanol auf eine 40%ige Lösung verdünnt. Der pH-Wert beträgt 8,8, die Lösung ist opak; EÄG 362.

9) 474 T epoxydiertes Polybutadienöl (EÄG = 242), 30 T Essigsäure und 1 T Tetramethylammoniumhydroxyd werden 4 Stunden bei 110°C in der Apparatur von Beispiel 1 erhitzt, bis die Säurezahl 2 ist. Anschließend wird auf 60°C gekühlt und 20 T Diäthylisopropylamin sowie 55,4 T Bernsteinsäureanhydrid zugesetzt und die Mischung 8 Stunden bei 60°C gehalten, bis die Säurezahl 50 ist. Dann wird mit 870 T entionisiertem Wasser auf 40 % verdünnt und der pH-Wert mit Dimethylaminoäthanol auf 8,0 eingestellt. Man erhält ein klares bis leicht opakes Produkt; EÄG 487.

10) Vorprodukt: 450 T epoxydiertes Leinöl (EÄG = 180) und 450 T des epoxydierten Sojaöls des Beispiels 1 werden zusammen mit 59,6 T Essigsäure und 0,5 T entwässertem Chrom(III)octoat 5 Stunden bei 100°C unter Rühren und leichtem Rückfluß erhitzt, bis die Säurezahl 2 ist.

450 T des Vorproduktes und 44,5 T Bernsteinsäureanhydrid sowie 20 T Diäthylisopropylamin werden 8 Stunden bei 60°C umgesetzt, bis die Säurezahl 50 beträgt. Anschließend wird mit 772 T entionisiertem Wasser und Dimethylaminoäthanol auf eine 40%ige Lösung von pH = 7,5 eingestellt. Die Lösung ist opak; EÄG 430.

11) 950 T epoxydiertes Leinöl des Beispiels 10, 160,4 T Ricinenfettsäure, 50 T Essigsäure sowie 1 T Tetrabutylammoniumhydroxyd werden bei 110°C unter Rühren und Rückfluß umgesetzt, bis die Säurezahl 3 beträgt.

Anschließend werden 257,3 T Tetrahydrophthalsäureanhydrid und 15 T Pyridin zugesetzt und das Gemisch bei 70°C gehalten, bis die Säurezahl 50 beträgt. Mit 2126 T entionisiertem Wasser wird auf eine 40%ige Lösung verdünnt, die mit Dimethylaminoäthanol auf pH = 9,5 eingestellt wird. Die Lösung ist opak; EÄG 356.

12) Vorprodukt: 700 T des epoxydierten Sojaöls des Beispiels 1, 200 T 3,4-Epoxycyclohexylmethyl-3',4'-epoxycyclohexancarboxylat

(EÄG = 140), 56,8 T Essigsäure sowie 2 T Chrom(III)octoat werden 3 Stunden auf 110°C erhitzt. Die Säurezahl beträgt 0,6.

450 T Vorprodukt sowie 44,5 T Bernsteinsäureanhydrid und 15 T Triäthylamin (wasserfrei) werden 8 Stunden bei 60°C umgesetzt bis zu einer Säurezahl von 50. Mit 764 T Wasser wird das Produkt auf 40 % verdünnt und anschließend mit Dimethylaminoäthanol auf pH 8,2 eingestellt. Man erhält eine opake Lösung; EÄG 420.

13) Im Reaktionsgefäß von Beispiel 1 werden 160 T epoxydierten Linolfettsäuremethylester

(EÄG = 161) mit 30 T Essigsäure sowie 0,5 T Hexamethylammoniumhydroxyd 4 Stunden lang auf 110°C erhitzt. Die Säurezahl beträgt nach der Umsetzung 0,8. Die Reaktionsmischung wird auf 50°C gekühlt und 77 T Hexahydrophthalsäureanhydrid sowie 50 T Triäthylamin zugefügt und die Mischung so lange bei 50°C gehalten, bis die Säurezahl 85 beträgt. Anschließend wird mit 317 T entionisiertem Wasser auf eine 50%ige Lösung verdünnt. Man erhält eine fast klare Lösung vom pH-Wert 8,8; EÄG 355.

**II) Herstellung der Beschichtungen**

14) Zwei Bleche werden mit einem farbtonstabilen handelsüblichen weißpigmentierten Einbrennlack aus einem Gemisch von Acrylharz und Melaminharz beschichtet und eingebrannt. Darauf wird eine Dispersion eines Copolymerisats auf der Basis von Äthylen, Vinylchlorid und Vinylacetat mit 10 % wasserlöslichem Epoxyd gemäß Beispiel 1 (fest auf fest) unter Rühren vermischt. Dieses Überzugsmittel wird auf das eine Blech als Klarlacküberzug aufgebracht und luftgetrocknet.

14 V (Vergleich) Auf das andere Blech wird ebenfalls ein Klarlacküberzug aus derselben Polymerisatdispersion, jedoch ohne Zusatz des erfindungsgemäßen Epoxyds aufgebracht und luftgetrocknet.

Beide Beschichtungen wurden in Süd-Florida bewittert. Die mit wasserlöslichem Epoxyd stabilisierte Beschichtung zeigte auch nach einjähriger Bewitterung guten Glanz und nur eine ganz schwache Vergilbung, während die nicht stabilisierte Beschichtung stark vergilbt war und eine matte Oberfläche aufwies.

15) bis 22) In diesen Beispielen wird die in Tabelle 1 angegebene Menge an Polyesterlösung gemäß nachfolgender Tabelle A mit der angegebenen Menge an erfindungsgemäßem wasserlöslichem Epoxyd gemischt. Anschließend wird die dem Festkörpergehalt der Mischung entsprechende Menge an Titandioxyd zugemischt und auf einer Perlmühle abgerieben. Der Lack wird dann mit dem in Tabelle 1 angegebenen Anteil Melaminharz versetzt, homogenisiert und anschließend mit entionisiertem Wasser auf eine Spritzviskosität von 18 DIN-Sekunden im 4 mm-Becher eingestellt. Nach einer Ruhezeit von drei Tagen werden die Lacke mit Sprühpistolen auf phosphatierte Stahlbleche aufgespritzt und nach einer Ablüftzeit von 20 Minuten bei Raumtemperatur unter den in Tabelle 2 angegebenen Bedingungen eingebrannt. Die Trockenfilmstärke der Beschichtungen beträgt in allen Fällen etwa 40 µm.

Als Polyester dienten jeweils die wäßrigen Lösungen der Polyester a) bis e) der Tabelle A und als Epoxydkomponente wurde jeweils eine 40 %ige Lösung eingesetzt.

**Tabelle A**

| | | a | b | c | d | e |
|---|---|---|---|---|---|---|
| Polyester A: | | | | | | |
| PSA | (T) | 732 | 722 | 682 | 722 | 722 |
| Neopentylglykol | " | 572 | 578 | 579 | 579 | 579 |
| Trimethylpropan | " | 55 | 36.7 | 37 | 75 | 150 |
| epoxydiertes Sojaöl (EÄG 260) | | 130 | 173.3 | 173 | 251 | 251 |
| Monoepoxyd* | | 96 | 89 | 94 | 105 | 108 |
| Polyester A | | 300 | 600 | 600 | 600 | 600 |
| TMA | | 28.1 | 56.2 | 56 | 56 | 56 |
| Dimethylaminoäthanol | | 22.7 | 45.4 | 46 | 46 | 45 |
| Festkörpergehalt(%) | | 50 | 55 | 50 | 50 | 50 |

*) Glycidylester einer in α-Stellung verzweigten Monocarbonsäure mit 10 bis 12 C-Atomen
PSA = Phthalsäureanhydrid
TMA = Trimellithsäureanhydrid

Die Herstellung der Polyester erfolgt in einem mehrstufigen Schritt, wobei zuerst Phthalsäureanhydrid, Neopentylglykol, Trimethylpropan und das epoxydierte Sojaöl in Gegenwart von ca 100 T Toluol bei 220°C innerhalb ca. 8 Stunden umgesetzt wird, anschließend wird nach Abdestillation des Toluols das Monoepoxyd zugesetzt und während 4 Stunden bei 120°C gehalten. Der erhaltene Polyester wird dann 3 bis 4 Stunden mit Trimellithsäureanhydrid erhitzt, nach Abkühlung auf 90°C mit Diethanolaminoäthanol neutralisiert und mit entionisiertem Wasser auf den gewünschten Festkörpergehalt eingestellt.

In Beispielen 15 bis 17 und 22 wurde jeweils Hexamethoxymethylmelamin und in Beispielen 19 und 20 ein mit Methanol teilveräthertes Hydroxymethylmelamin als Aminharz eingesetzt.

23) 50 T der Polyesterlösung c) werden mit 62,5 T einer 40%igen wäßrigen Epoxydlösung aus Beispiel 1 gemischt und mit Dimethylaninoäthanol auf pH 8,0 eingestellt. Anschließend werden 100 T Titandioxyd zugemischt und das Ganze auf einer Perlmühle abgerieben. Dann werden 100 T einer 50%igen hydroxyl- und carboxylgruppenhaltigen Acrylatdispersion auf der Basis von Butylacrylat, Methylmethacrylat, Hydroxyäthylacrylat und Acrylsäure zusammen mit 10 T Hexamethoxymethylmelamin zugemischt und mit entionisiertem Wasser auf 18 DIN-sekunden im 4 mm-Becher eingestellt und auf Erichsen-Bleche gespritzt.

Die Filmeigenschaften dieses Beispiels und der Beispiele 15-22 gehen aus nachstehender Tabelle 2 hervor.

24) 100 T des wasserlöslichen Epoxyds (40%ig) aus Beispiel 7 werden mit 200 T Titandioxyd under Zufägen von 50 T entionisiertem Wasser und 2 T Natriumpolyphosphat in einer Perlmühle abgerieben. Anschließend werden 120 T einer 50%igen Acrylatdispersion auf Basis von Butylacrylat, Methylmethacrylat, Styrol und Acrylsäure unter leichtem Rühren sowie 2 T Cholin zugesetzt. Mit einem Aufziehrakel werden Naßfilme mit

einer Schichtdicke von 200 µm auf eine Glasplatte aufgezogen. Der Film wird 14 Tage bei Raumtemperatur getrocknet. Es resultiert ein nicht klebender, hoch glänzender Film von guter Wasser- und Abriebbeständigkeit.

25) 160 T der Polyesterlösung c) werden mit 75 T wäßrigem Epoxyd (40%ig) aus Beispiel 11 gemischt. Die Mischung wird nach bekannten Methodon mit Eisenoxydrot (100 : 50 fest auf fest) pigmentiert und mit Wasser-Äthylenglykolmonoäthyläther (10 : 1) auf 15 % Festkörper verdünnt. Das Elektrophoresebad wird auf 25°C eingestellt und phosphatierte Eisenbleche eingehängt. Bei einer Spannung von 150 V wird der Elektrophoreselack an der Anode abgeschieden. Die Filme werden getrocknet und bei 170°C während 30 Minuten eingebrannt. Die Beschichtung ist ausgezeichnet salzsprüh-

**Tabelle 1**

| Anwendungsbeispiel Nr. | Wäßrige Polyesterlösung T | %ig | gemäß Tab. A | Lösung wasserlösliches Epoxyd T | nach Beispiel | Melaminharz T | Katalysator T | Typ |
|---|---|---|---|---|---|---|---|---|
| 15 | 160 | 50 | a | 50 | 6 | 30 | — | |
| 16 | 150 | 55 | b | 50 | 11 | 20 | 0,5 | Cholin |
| 17 | 160 | 50 | c | 75 | 10 | 30 | 0,5 | LiOH $H_2O$ |
| 18 | 140 | 50 | d | 75 | 11 | — | 0,5 | Tetramethylammoniumhydroxyd |
| 19 | 200 | 40 | +) | 25 | 9 | 20 | — | |
| 20 | 160 | 50 | d | 50 | 11 | 20 | 1,0 | Cholin |
| 21 | 145 | 50 | e | 90 | 8 | — | 0,5 | Tetrabutylammoniumhydroxyd |
| 22 | 120 | 50 | c | 75 | 4 | 30 | | |

+) aus Pentaerythrit, Isophthalsäure und Ricinenfettsäure

**Tabelle 2**

| Beispiel Nr. | Härtung 30min/°C | Glanz nach Lange ∢ 60°C) (DIN 67 530) | Pendelhärte s (nach König (DIN 53 157) | Beständigkeit gegen Xylol min | Beständigkeit gegen 10% NaOH h | Erichsentiefung (DIN 53 156) mm | Schlagtiefung reverse (inch.pound) (ASTM-D 2795-69) | Gitterschnitt 0=bester Wert 5=schlechtester Wert (DIN 53 151) |
|---|---|---|---|---|---|---|---|---|
| 15 | 140 | 88 | 135 | 8 | 24 | 9,7 | 40 | 0 - 1 |
| 16 | 130 | 86 | 156 | 10 | ca. 20 | 10,2 | 100 | 0 |
| 17 | 160 | 82 | 192 | >30 | >48 | 8,2 | 60 | 1 |
| 18 | 120 | 88 | 160 | 3 | 8 | 9,5 | 160 | 0 - 1 |
| 19 | 130 | 92 | 195 | 30 | 4 | 7,2 | — | 1 |
| 20 | 90 | 85 | 145 | 11 | 7 | 9,6 | 44 | 0 |
| 21 | 130 | 82 | 120 | 2 | 2 | 10,5 | 80 | 0 - 1 |
| 22 | 160 | 89 | 170 | 12 | 24 | 10,8 | 120 | 0 |
| 23 | 140 | 88 | 160 | 20 | >72 | 8 | 20 | 1 |

**III) Diskussion der Ergebnisse**

Wie sich aus Tabelle 2 ergibt, zeigen die mit den erfindungsgemäßen Epoxyden hergestellten Beschichtungen neben einem hohen Glanz (vergl. insbesondere Beispiel 19) sehr gute mechanische Eigenschaften, die sich vor allem auf die hohe Erichsen-Tiefung und die hohe Schlagtiefung stützen. Daneben weisen die Überzüge eine gute Haftung und Elastizität auf. Dies ergibt sich aus den vorteilhaften Werten des Gitterschnittes.

Besonders überraschend ist die hohe chemische Beständigkeit, vor allem die Alkalifestigkeit der Beschichtungen, die weit über das bei wäßrigen Systemen übliche Maß hinausgeht und die neben den anderen günstigen lacktechnischen Eigenschaften noch einen zusätzlichen Vorteil bietet.

Außerdem wurde für die Beschichtungen der Florida-Test über 18 Monate durchgeführt. Hierbei wurde nur ein geringfügiger Glanzabfall festgestellt, so daß auch eine gute Witterungsbeständigkeit gewährleistet ist.

**IV) Verwendung als Stabilisator- bzw. Emulgator-Komponente**

26) Eine mit Dimethylaminoäthanol auf einen pH-Wert von 8,5 eingestellte 40%ige Lösung in Wasser-Diacetonalkohol 9 : 1 eines Polyesters auf Basis von Pentaerythrit, Isophthalsäure und Ricinenfettsäure wird mit dem wasserlöslichen Epoxyd vom Beispiel 11 gemischt (70 T Polyester fest + 30 T Epoxyd fest) und bei 50°C in einem Trockenschrank gelagert. Dabei wird der Abfall des pH verfolgt.

26 V (Vergleich) Es wird gearbeitet wie nach Beispiel 26, jedoch ohne Zusatz eines erfindungsgemäßen Epoxyds.

Der Abfall des pH-Werts in Abhängigkeit von der Lagerdauer bei 50°C ist in der graphischen Darstellung veranschaulicht. Kurve 26 zeigt die mit Probe 26 ermittelten Werte, Kurve 26 V zeigt den Verlauf des pH-Werts beim Vergleichsversuch. Der Vergleich der Kurven zeigt eindeutig die den pH-Wert stabilisierende Wirkung des wasserlöslichen erfindungsgemäßen Epoxyds gegenüber dem reinen Polyesterharz.

27) In einem 2-Liter Kolben, ausgerüstet mit Rührer Rückflußkühler und regelbarer Heizung und zwei Tropftrichtern werden 300 T Wasser, 9,6 T Polyvinylalkohol und 80 T 40%iges wasserlösliches Epoxyd aus Beispiel 11 vorgelegt und auf 60°C erhitzt. Anschließend werden aus dem einen Tropftrichter 2,4 T Ammoniumperoxydisulfat, gelöst in 40 T Wasser, und gleichzeitig aus dem anderen Tropftrichter 480 T Vinylacetat während 3 Stunden anteilweise zugegeben. Dann wird noch 3 h bei 60°C nachpolymerisiert.

Es wird eine stabile Dispersion erhalten, die sich für Verleimungen eignet und sehr wasserfest ist.

**Formelblatt**

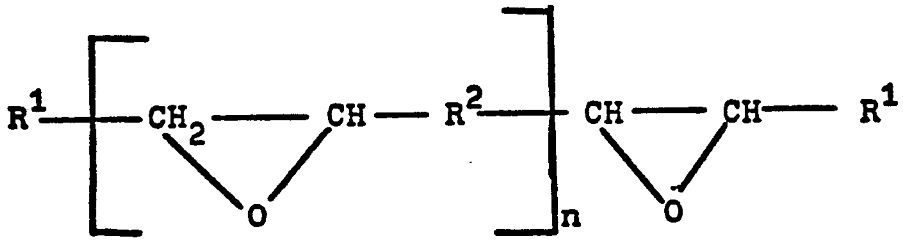

(I)

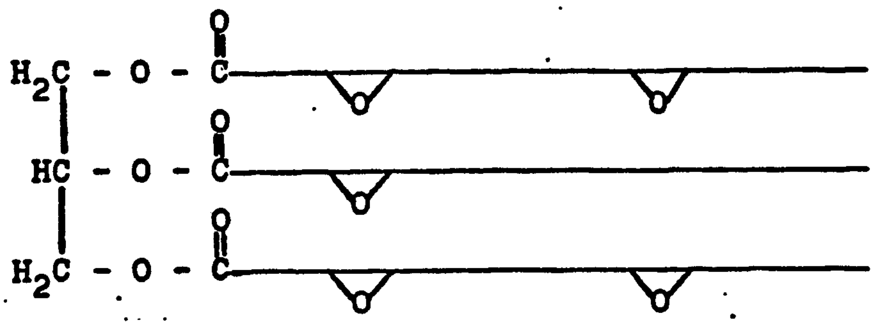

(Ia)

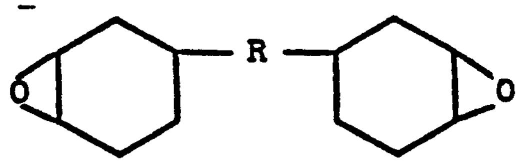

(II)

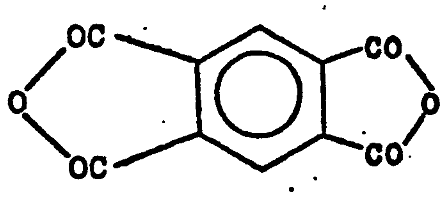

(III)

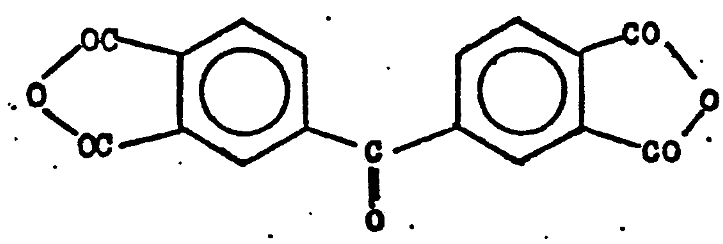

(IV)

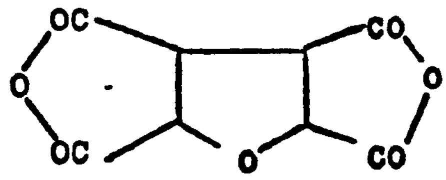 (V)

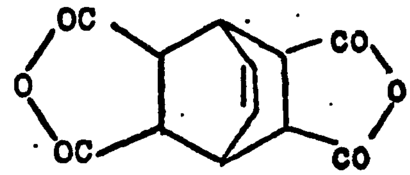 (Va)

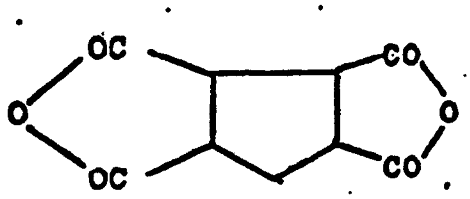 (Vb)

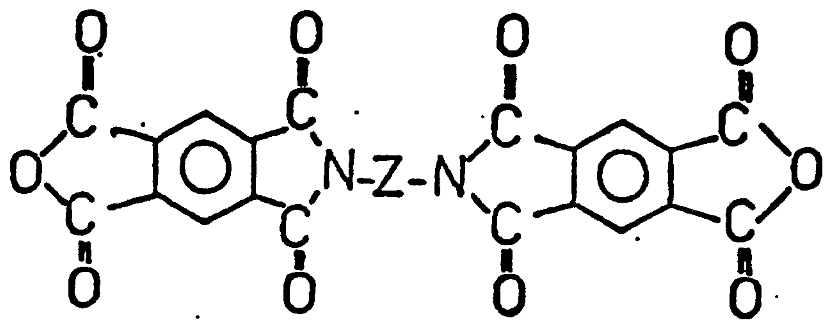

(VI)

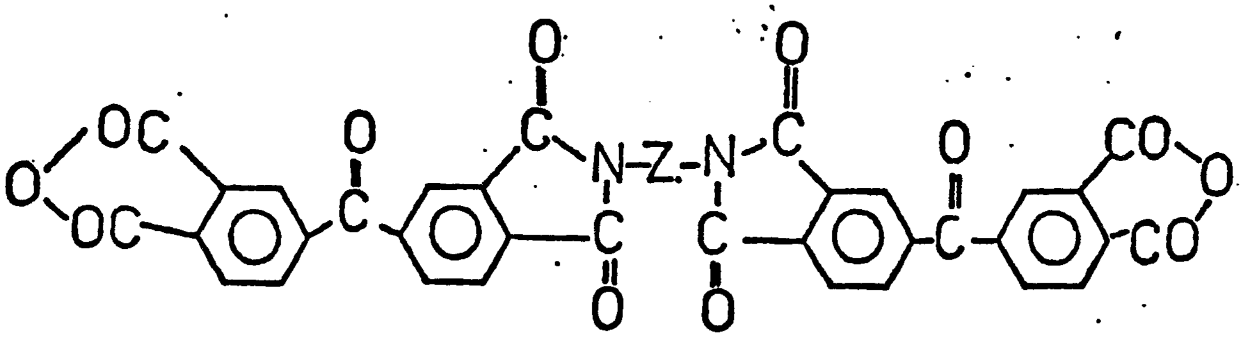

(VII)

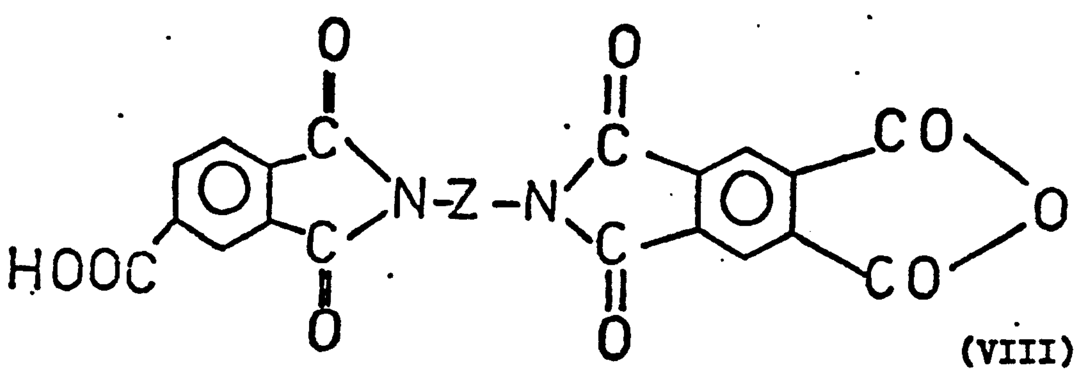

(VIII)

$Z = (CH_2)_m$ m = 2-8

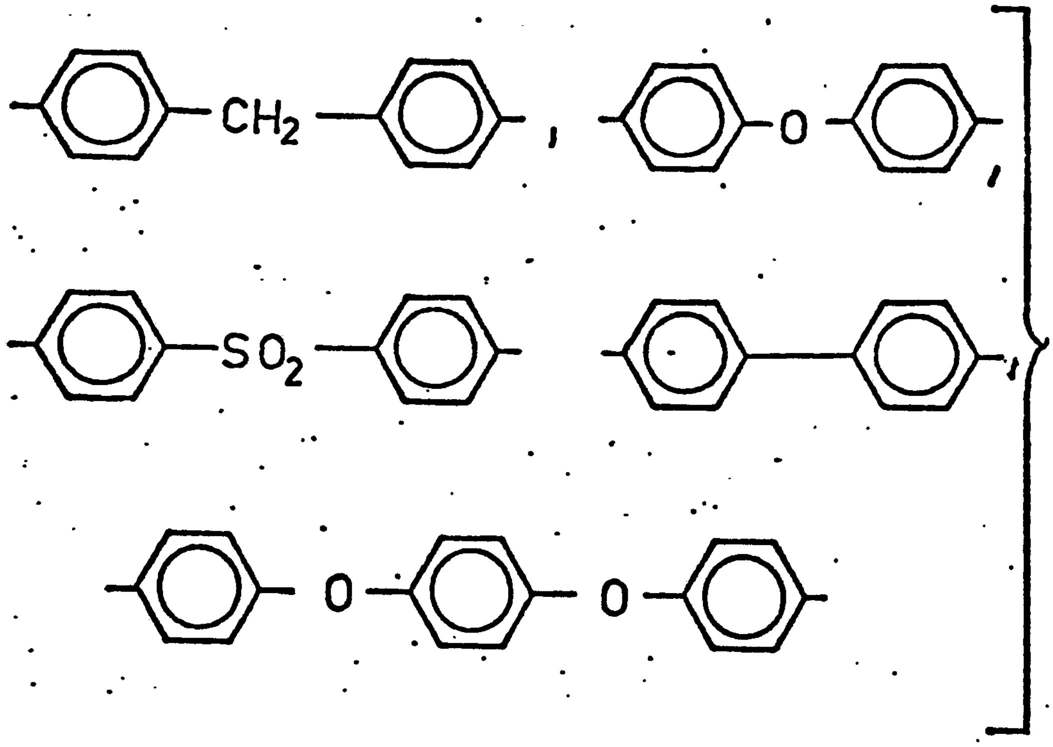

(IX)

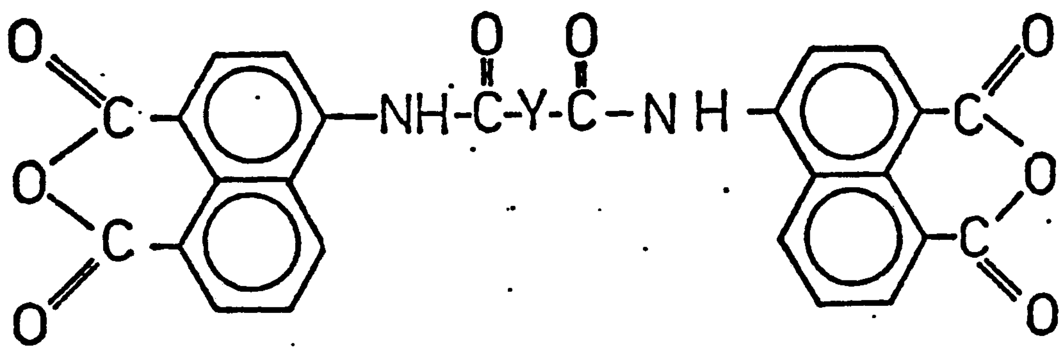

(X)

Y= 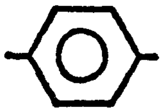 , 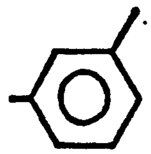 , 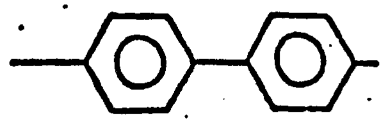

(XI);

$= (CH_2)_p$
p = 2-8

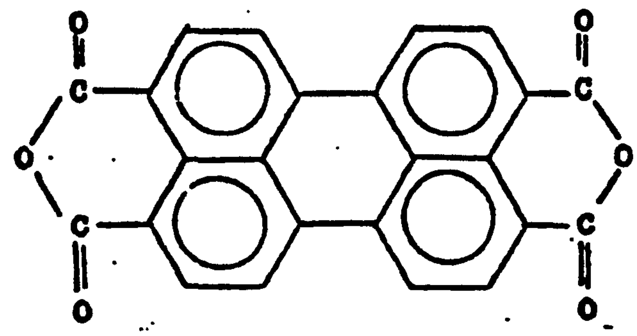

(XII)

**Patentansprüche** für die Vertragsstaaten BE CH DE FR GB IT LI NL SE

1) Mit Wasser verdünnbares Epoxyd, das frei von Glycidylester- und -äthergruppen ist, dadurch gekennzeichnet, daß es außer mindestens einer Epoxydgruppe mindestens eine Estergruppe einer Monocarbonsäure und eine dieser benachbarte weitere Estergruppe enthält, die durch Umsetzung einer OH-Gruppe mit einem Polycarbonsäuremonoanhydrid entstanden ist, wobei die aus dem Anhydrid bei der Veresterung gebildete zweite COOH-Gruppe ganz oder teilweise in Form eines Salzes einer Base, die in Mengen von mindestens 1 Gew % eingesezt ist und sich auf das unversalzte Reaktionsprodukt bezieht, vorliegt und worin die Anzahl der Esterbindungen der Monocarbonsäure höchstens so groß ist wie die Zahl der noch intakten Epoxydgruppen.

2) Epoxyd nach Anspruch 1, dadurch gekennzeichnet, daß das Epoxyd auf der Basis einer epoxydierten Fettsäure, deren Derivaten und/oder von epoxydierten Polyolefinen vorliegt.

3) Epoxyd nach Anspruch 1 oder 2, dadurch gekennzeichnet, daß der Monocarbonsäurerest sich von einer Monocarbonsäure mit 2 bis 22 C-Atomen, vorzugsweise einer gesättigten Monocarbonsäure mit 2 bis 18 die frei von aliphatischen Mehrfachbindungen ist, oder einer olefinisch ungesättigten mit 3 bis 20, vorzugsweise 8 bis 16 C-Atomen ableitet.

4) Epoxyd nach einem oder mehreren der Ansprüche 1 bis 3, dadurch gekennzeichnet, daß ihm ein Monoanhydrid einer carbocyclischen und/oder aliphatischen Polycarbonsäure, vorzugsweise Bernsteinsäureanhydrid, Phthalsäureanhydrid, Tetrahydrophthalsäureanhydrid, Hexahydrophthalsäureanhydrid, oder Trimellithsäureanhydrid, zugrunde liegt.

5) Epoxyd nach einem oder mehreren der Ansprüche 1 bis 4, dadurch gekennzeichnet, daß es ein Salz eines tertiären Amins, vorzugsweise eines Trialkylamins enthält.

6) Verfahren zur Herstellung des Epoxydes nach einem oder mehreren der Ansprüche 1 bis 5, dadurch gekennzeichnet, daß

a) in erster Stufe bis zu 50 % der Epoxydgruppen eines Ausgangspolyepoxyds, das frei von Glycidylester- und -äthergruppen ist, mit einer Monocarbonsäure unter Bildung einer/ der gebildeten Estergruppe benachbarten OH-Gruppe verestert wird, wobei die Anzalh der Esterbindungen der Monocarbonsäure höchstens so groß ist wie die Zahl der noch intakten Epoxydgruppen,

b) daß gleichzeitig oder darauf in zweiter Stufe die freien CH-Gruppen mit einem Polycarbonsäuremonoanhydrid in Gegenwart von mindestens 1 Gew % einer Base, vorzugsweise eines tertiären Amins, bezogen auf das unversalzte Reaktionsprodukt umgesetzt werden, wobei die Anhydridgruppe geöffnet und eine COOH-Gruppe davon verestert und die zweite COOH-Gruppe zumindest teilweise in das Selz der entsprechenden Base übergeführt wird, worauf

c) das Produkt als solches gewonnen oder in einer weiteren Stufe mit einem Lösungsmittel, vorzugsweise Wasser, verdünnt wird und daß dieses Produkt allein oder in Kombination mit weiteren Mengen von Basen, vorzugsweise tertiären Aminen gewonnen wird.

7) Verfahren nach Anspruch 6, dadurch gekennzeichnet, daß in der Stufe a) 10 bis 50 % der Epoxydgruppen des Ausgangspolyepoxydes gegebenenfalls in Gegenwart eines Katalysators verestert werden.

8) Verfahren nach Anspruch 6 oder 7, dadurch gekennzeichnet, daß die Umsetzung in erster Stufe bei einer Temperatur von mindestens 30°C und die Umsetzung in zweiter Stufe bei einer Temperatur bis zu 120°C erfolgt.

9) Verwendung des Epoxyds nach einem oder mehreren der Ansprüche 1 bis 5 oder der nach dem Verfahren gemäß einem oder mehreren der Ansprüche 6 bis 8 hergestellten Produkte als Bindemittel allein oder in Kombination mit COOH-Gruppen enthaltenden Substanzen und gegebenenfalls Aminherzen in wäßrigen oder mit Wasser verträglichen Medien, insbesondere zur Herstellung von gehärteten Überzügen, und vorzugsweise als Zusatz zu Dispersionen von Monomeren und/oder Polymeren.

10) Überzugsmischung auf der Basis eines Epoxyds nach einem oder mehreren der Ansprüche 1 bis 5 oder eines Produkts, das nach dem Verfahren eines oder mehrerer der Ansprüche 6 bis 8 erhalten worden ist

**Patentansprüche** für den Vertragsstaat AT

1) Verfahren zur Herstellung von mit Wasser verdünnbarem Epoxyd, das frei von Glycidylester- und -äthergruppen ist, dadurch gekennzeichnet, daß

a) in erster Stufe bis zu 50 % der Epoxydgruppen eines Ausgangspolyepoxyds,das frei von Glycidylester- und -äthergruppen ist, mit einer Monocarbonsäure unter Bildung einer, der gebildeten Estergruppe benachbarten/ OH-Gruppe verestert wird, wobei die Anzahl der Esterbindungen der Monocarbonsäure höchstens so groß ist wie die Zahl der noch intakten Epoxygruppen,

b) daß gleichzeitig oder darauf in zweiter Stufe die freien OH-Gruppen mit einem Polycarbonsäuremonoanhydrid in Gegenwart von mindestens 1 Gew % einer Base, vorzugsweise eines tertiären Amins, bezogen auf das unversalzte Reaktionsprodukt umgesetzt werden, wobei die Anhydridgruppe geöffnet und eine COOH-Gruppe davon verestert und die zweite COOH-Gruppe zumindest teilweise in das Salz der entsprechenden Base übergeführt wird, wobei man ein Epoxyd erhält, das außer mindestens einer Epoxydgruppe mindestens eine Estergruppe der Monocarbonsäure und eine dieser benachbarte weitere Estergruppe enthält, die durch Umsetzung einer OH-Gruppe mit dem Polycarbonsäuremonoanhydrid entstanden ist, worauf

c) das Produkt als solches gewonnen oder in einer weiteren Stufe mit einem Lösungsmittel, vorzugsweise Wasser, verdünnt wird und daß dieses Produkt allein oder in Kombination mit weiteren Mengen von Basen gewonnen wird.

2) Verfahren nach Anspruch 1, dadurch gekennzeichnet, daß man von einer epoxydierten Fettsäure, deren Derivaten und/oder von epoxydierten Polyolefinen als Polyepoxyd ausgeht.

3) Verfahren nach Anspruch 1 oder 2, dadurch gekennzeichnet, daß man von einer Monocarbonsäure mit 2 bis 22 C-Atomen, vorzugsweise einer gesättigten Monocarbonsäure mit 2 bis 18, die frei von aliphatischen Mehrfachbindungen ist, oder einer olefinisch-ungesättigten mit 3 bis 20, vorzugsweise 8 bis 16 C-Atomen. ausgeht.

4) Verfahren nach einem oder mehreren der Ansprüche 1 bis 3, dadurch gekennzeichnet, daß in Stufe b) ein Monoanhydrid einer carbocyclischen und/oder aliphatischen Polycarbonsäure, vorzugsweise Bernsteinsäureanhydrid, Phthalsäureanhydrid, Tetrahydrophthalsäureanhydrid, Hexahydrophthalsäureanhydrid oder Trimellithsäureanhydrid, umgesetzt wird.

5) Verfahren nach einem oder mehreren der Ansprüche 1 bis 4, dadurch gekennzeichnet, daß die COOH-Gruppe in Stufe b) in ein Salz eines tertiären Amins, vorzugsweise eines Trialkylamins übergeführt wird.

6) Verfahren nach einem oder mehreren der Ansprüche 1 bis 5, dadurch gekennzeichnet, daß in der Stufe a) 10 bis 50 % der Epoxydgruppen des Ausgangspolyepoxydes, gegebenenfalls in Gegenwart eines Katalysators, verestert werden.

7) Verfahren nach einem oder mehreren der Ansprüche 1 bis 6, dadurch gekennzeichnet, daß die Umsetzung in erster Stufe bei einer Temperatur von mindestens 30°C und die Umsetzung in zweiter Stufe bei einer Temperatur bis zu 120°C erfolgt.

8) Verwendung der nach einem oder mehreren der Ansprüche 1 bis 7 hergestellten Produkte als Bindemittel allein oder in Kombination mit COOH-Gruppen enthaltenden Substanzen und gegebenenfalls Aminharzen in wäßrigen oder mit Wasser verträglichen Medien, insbesondere zur Herstellung von gehärteten Überzügen.

9) Verwendung nach Anspruch 8 als Zusatz zu Dispersionen von Monomeren und/oder Polymeren.

**Claims** for the Contracting states: BE, CH, DE, FR, GB, IT, LI, NL, SE

1. A water-dilutable epoxide which is free from glycidyl ester and glycidyl ether groups, characterized in that it contains, in addition to at least one epoxide group, at least one ester group of a monocarboxylic acid and a further ester group which is vicinally arranged thereto this further ester group having been obtained by reaction of an OH group with a polycarboxylic monoanhydride, wherein the second COOH group formed from the anhydride by the esterification is present wholly or partially in the form of a salt with a base, the proportion of the base being at least 1 % by weight based on the reaction product which has not been converted into a salt and in which the amount of the ester linkages are at most equal to the number of the remaining epoxide groups.

2. An epoxide as claimed in claim 1, characterized in that the epoxide is based on an epoxidised fatty acid, a derivativ thereof and/or an epoxidised polyolefin.

3. An epoxide as claimed in either of claims 1 and 2, characterized in that the monocarboxylic group is derived from a monocarboxylic acid having from 2 to 22 carbon atoms preferably a saturated monocarboxylic acid with 2 to 18 car bon atoms, which is free from aliphatic multiple bonds, or an olefinically unsaturated monocarboxylic acid having from 3 to 20, preferably from 8 to 18 carbon atoms.

4. An epoxide as claimed in one or more of claims 1 to 3, characterized in that it is based on a monoanhydride of a carbocyclic and/or aliphatic polycarboxylic acid, preferably succinic anhydride, phthalic anhydride, tetrahydrophthalic anhydride, hexahydrophthalic anhydride or trimellitic anhydride.

5. An epoxide as claimed in one or more of claims 1 to 4, characterized in that it contains a salt of a tertiary amine, preferably a trialkylamine.

6. A process for the preparation of an epoxide as claimes in one or more of claims 1 to 5, characterized in that

a) in a first step up to 50 % of the epoxide groups of a starting polyepoxide which is free from glycidyl ester and glycidyl ether groups is esterified with a monocarboxylic acid, thareby forming an ester group and an OH group which is vicinally arranged thereto, and in which the amount of the ester linkages are at most equal to the number of the remaining epoxide groups,

b) simultaneously or subsequently, in a second step, the free CH groups are reacted with at least one polycarboxylic monoanhydride in the presence of at least 1 % by weight of a bese, preferably a tertiary amine based on the reaction product which has not been converted into a salt, whereby the anhydride group is opened up and one COOH group thereof is esterified and the second COOH group is at least partially converted into the salt with the corresponding base, and

c) the product is recovered per se or is diluted, in a further step, with a solvent, preferably water, and this product, is recovered either alone or combined with further quantities of base, preferably tertiary amines.

7. A process as claimed in claims 1 to 5 characterized in that, in step a), 10 to 50 % of the apoxide groups of the starting polyepoxide are esterified, if dasired in the presence of a catalyst.

8. A process as claimed in either of claims 8 and 7, characterized in that the reaction in the first step is carried out at a temperature of at least 30° C and the reaction in the second step is carried out at a temperature of up to 120° C.

9. Use of the epoxide as claimed in one or more of claims 1 to 5 or of the products prepared by the process as claimed in one or more of claims 6 to 8, as binders, either alone or in combination with substances containing COOH groups, and optionally amine resins, in aqueous media or in media compatible with water, particularly for the preparation of hardened coatings and preferably as additives for dispersions of monomers and/or polymers.

10. A coating composition comprising an epoxide as claimed in one or more of claims 1 to 5 or a product of the proces; claimed in one or more of claims 6 to 8.

**Claims** for the Contacting state: AT

1 A process for the preparation of a water-dilutable epoxide which is free from glycidyl ester and glycidyl ether groups, characterized in that

a) at a first step up to 50 % of the epoxide groups of a starting polyepoxide which is free from glycidyl ester and glycidyl ether groups is esterified with a monocarboxylic acid, thereby forming an ester group and an OH group which vicinally arranged thereto, and in which the amount of the ester linkages are at most equal to the number of the remaining epoxide groups,

b) simultaneously or subsequently, in a second step, the free OH groups are reacted with at least one polycarboxylic monoanhydride in the presence of at least 1 % by weight of a base, preferably a tertiary amine based on the reaction product which has not been converted into a salt, whereby the anhydride group is opened up and one COOH group thereof is esterified and the second COOH group is at least partially converted into the salt with the corresponding base, and c) the product is recovered per se or is diluted, in a further step, with a solvent, preferably water, and this product is recovered either alone or combined with further quantities of base, preferably tertiary amines.

2. Process as claimed in claim 1, characterized in that an epoxidised fatty acid, a derivative thereof and/or an

epoxidised polyolefin is used as polyepoxide.

3. Process as claimed in either of claims 1 and 2, characterized in that a monocarboxylic acid having from 2 to 22 carbon atoms, preferably a saturated monocarboxylic acid with 2 to 18 carbon atoms, which is free from aliphatic multiple bonds, or an olefinically unsaturated monocarboxylic acid having from 3 to 20, preferably from 8 to 16 carbon atoms is used.

4. Process as claimed in one or more of claims 1 to 3, characterized in that in step b) a monoanhydride of a carbocyclic and/or aliphatic polycarboxylic acid, preferably succinic anhydride, phthalic anhydride, tetrahydrophthalic anhydride, hexahydrophthalic anhydride or trimellitic anhydride is reacted.

5. Process as claimed in one or more of claims 1 to 4, characterized in that the COOH-group in step b) is converte 3 into a tertiary amine, preferably a trialkylamine.

6. A process as claimed in one or more of claims 1 to 5 characterized in that, in step a), 10 to 50 % of the epoxide groups of the starting polyepoxide are esterified, if desir;d in the presence of a catalyst.

7. A process as claimed in one or more of claims 1 to 8, characterized in that the reaction in the first step is carried out at a temperature of at least 30°C and the reaction in the second step is carried out at a temperature of up to 120°C.

8. Use of the epoxide as claimed in one or more of claims 1 to 5 or of the products prepared by the process as claimed in one or more of claims 6 to 8, as binders, either alone or in combination with substances containing COOH groups, and optionally amine resins, in aqueous media or in media compatible with water, particularly for the preparation of hardened coatings as additives for dispersions of monomers and/or polymers.

9. A coating composition comprising an epoxide as claimed in one or more of claims 1 to 5 or a product of the process claimed in one or more of claims 6 to 8.

**Revendications** pour les Etats contractants:

BE, CH, DE, FR, GB, IT, LI, NL, SE

1. Epoxyde diluable à l'eau, qui ne comporte pas de groupe ester de glycidyle et éther -oxyde de glycidyle, caractérisé en ce que, en plus d'au moins un groupe époxyde, il contient au moins un groupe ester d'un acide monocarboxylique et un autre groupe ester voisin de celui-ci, qui résulte de la réaction d'un groupe OH avec un anhydride d'acide polycarboxylique, de sorte que le second groupe COOH, formé à partir de l'anhydride lors de l'estérification, est présent entièrement ou partiellement sous forme d'un sel d'une base introduite en des quantités d'au moins 1 % en poids rapportées au produit de réaction non salifié, le nombre des liaisons esters de l'acide monocarboxylique étant au maximum égal au nombre des groupes époxydes encore intacts.

2. Epoxyde selon la revendication 1, caractérisé en ce que l'époxyde est présent sur la base d'un acide gras époxydé, de ses dérivés et/ou de polyoléfines époxydées.

3. Epoxyde selon la revendication 1 ou 2, caractérisé en ce que le reste acide monocarboxylique dérive d'un acide monocarboxylique comportant 2 à 22 atomes de carbone, avantageusement un acide monocarboxylique saturé comportant 2 à 18 atomes de carbone, qui est dépourvu de liaisons multiples aliphatiques, ou d'un acide monocarboxylique à insaturation oléfinique comportant 3 à 20, avantageusement 8 à 16, atomes de carbone.

4. Epoxyde selon une ou plusieurs des revendications 1 à 3, caractérisé en ce qu'il est à base d'un monoanhydride d'un acide polycarboxylique carbocyclique et/ou aliphatique, avantageusement l'anhydride de l'acide succinique, l'anhydride de l'acide phtalique, l'anhydride de l'acide tétrahydrophtalique, l'anhydride de l'acide hexahydrophtalique ou l'anhydrige de l'acide trimellitique.

5. Epoxyde selon une ou plusieurs des revendications 1 à 4, caracterise en ce qu'il contient un sel d'une amine tertiaire, avantageusement d'une trialkylamine.

6. Procédé pour préparer l'époxyde selon une ou plusieurs des revendicitions 1 à 5, caracterise en ce que

a) dans une première étape, on estérifie jusqu'à 50 % des groupes époxydes d'un polyépoxyde de départ, qui est dépourvu de groupe ester de glycidyle et éther-oxyde de glycidyle, avec un acide monocarboxylique en formant un groupe OH voisin du groupe ester formé, le nombre des liaisons esters de l'acide monocarboxylique étant au maximum égal au nombre des groupes époxydes encore intacts,

b) en même temps ou dans une seconde étape, on fait réagir les groupes OH libres avec un monoanhydride d'acide polycarboxylique en présence d'au moins 1 % en poids d'une base, avantageusement d'une amine tertiaire, par rapport au produit de réaction non salifié, ce qui ouvre le groupe anhydride d'acide et l'on en estérifie un groupe COOH et l'on transforme au moins partiellement le second groupe COOH en le sel de la base correspondante, et

c) on recueille le produit tel quel ou, dans une étape supplémentaire, on le dilue avec un solvant, avantageusement l'eau, et l'on obtient ce produit seul ou en combinaison avec d'autres quantités de bases avantageusement des amines tertiaires.

7. Procédé selon la revendication 6, caractérisé en ce que, dans l'étape a) on estérifie 10 à 50 % des groupes époxydes du polyépoxyde de départ, éventuellement en présence d'un catalyseur.

8. Procédé selon la revendication 6 ou 7, caractérisé en ce que la réaction a lieu dans la première étape à une température d'au moins 30°C et la réaction a lieu dans la seconde étape à une température pouvant aller jusqu'à 120°C.

9. Utilisation de l'époxyde selon une ou plusieurs des revendications 1 à 5 ou des produits, préparés d'après le procédé selon und ou plusieurs des revendications 6 à 8, comme liant, seuls ou en combinaison avec des substances contenant les groupes COOH et éventuellement des résines de type amine dans des milieux aqueux ou compatibles avec l'eau, en particulier pour preparer des revêtements durcis, et avantageusement comme additifs à des dispersions de monomères et/ou de polymères.

10. Mélange pour revêtements, à base d'un époxyde selon une ou plusieurs des revendications 1 à 5, ou d'un produit qui a été obtenu d'après le procédé selon une ou plusieurs des revendications 6 à 8.

**Revendications** pour l'Etat contractant: AT

1. Procédé pour préparer un expoxyde diluable à l'eau qui est dépourvu de groupes ester de glycidyle et éther-oxyde de glycidyle, procédé caractérisé en ce que:

a) dans une première étape, on estérifie jusqu'à 50 % des groupes époxydes d'un polyepoxyde de départ, qui est dépourvu de groupe ester de glycidyle et éther-oxyde de giycidyle, avec un acide monocarboxylique en formant un groupe OH voisin du groupe ester formé, le nombre de liaisons esters de l'acide monocarboxylique étant au maximum égal au nombre des groupes époxydes encore intacts,

b) simultanément, ou ensuite dans une seconde étape, on fait réagir les groupes OH libres avec un monoanhydride d'acide polycarboxylique en présence d'au moins 1 % en poids, par rapport au produit de réaction non salifie, d'une base, avantageusement une amine tertiaire, ce qui ouvre le groupe anhydride et en estérifie un groupe COOH, et l'on transforme au moins partiellement le second groupe COOH en le sel de la base correspondante, de sorte que l'on obtient un époxyde qui, en plus d'au moins un groupe époxyde, contient au moins un groupe ester de l'acide monocarboxylique et un autre groupe ester qui en est voisin, et qui provient de la réaction d'un groupe OH avec le monoanhydride d'acide polycarboxylique, puis

c) on récupère le produit tel quel ou, dans une autre étape, on le dilue avec un solvant, avantageusement l'eau et l'on recueille ce produit seul ou en combinaison avec d'autres quantités de base.

2. Procédé selon le revendication 1, caractérisé en ce qu'on part d'un acide gras époxydé, de ses dérivés et/ou de polyoléfines époxydées comme polyépoxydes.

3. Procédé selon la revendication 1 ou 2, caractérisé en ce que qu'on part d'un acide monocarboxylique comportant 2 à 22 atomes de carbone, avantageusement un acide monocarboxylique saturé comportant 2 à 18 atomes de carbone, qui est dérourvu de liaisons multiples aliphatiques, ou d'un acide monocarboxylique à insaturation oléfinique comportant 3 à 20, avantageusement 8 à 16 atomes de carbone.

4. Procédé selon une ou plusieurs des revendications 1 à 3, caractérisé en ce que, dans l'étape b) on fait réagir un monoanhydride d'un acide polycarboxylique carbocyclique et/ou aliphatique, avantageusement l'anhydride de l'acide succinique, l'anhydride de l'acide phtalique, l'anhydride de l'acide tétrahydrophtalique, l'anhydride de l'acide hexahydrophtalique ou l'anhydride de l'acide trimellitique.

5. Procédé selon une ou plusieurs des revendications 1 à 4, caractérisé en ce que, dans l'étape b), on transforme le groupe COOH en un sel d'une amine tertiaire, avantageusement d'une trialkylamine.

6. Procédé selon une ou plusieurs des revendications 1 à 5, caractérisé en ce que, dans l'étape a), on estérifie 10 à 50 % des groupes époxydes du polyépoxyde de départ, éventuellement en présence d'un catalyseur.

7. Procédé selon une ou plusieurs des revendications 1 à 6, caractérisé en ce que la réaction a lieu dans une première étape à une température d'au moins 30° C et en ce que la réaction a lieu dans une seconde étape à une température pouvant aller jusqu'à 120° C.

8. Utilisation des produits, préparés selon une ou plusieurs des revendications 1 à 7, comme liants, isolément ou en combinaison avec des substances contenant des groupes COOH et éventuellement des résines de type amine dans des milieux aqueux ou compatibles avec l'eau, en particulier pour produire des revêtements durcis.

9. Utilisation selon la revendication 8, comme additifs à dispersions de monomères et/ou de polymères.

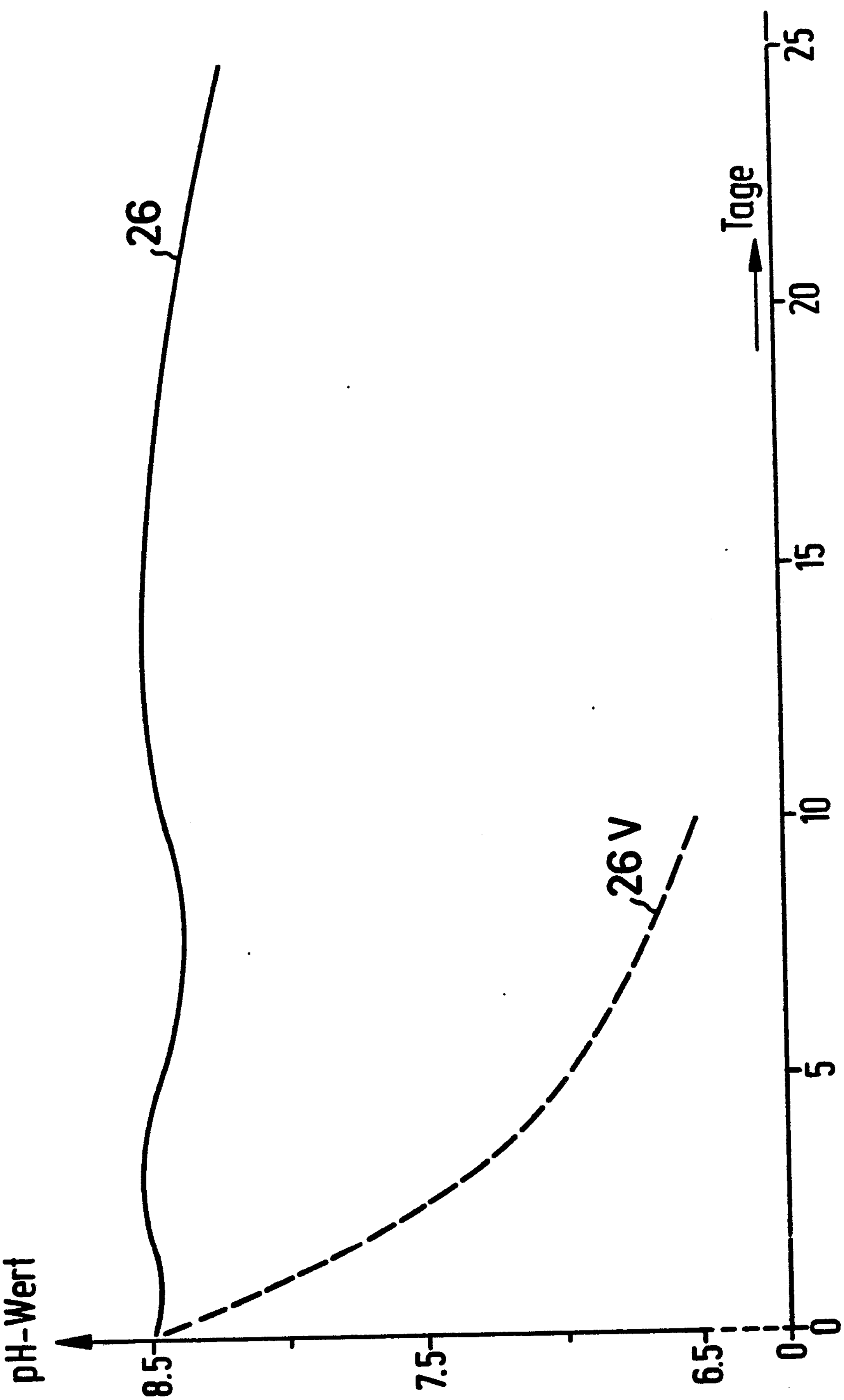


1